Europäisches Patentamt

(19) **European Patent Office**

Office européen des brevets

(11) Publication number: **0 222 579**
**A2**

(12) # EUROPEAN PATENT APPLICATION

(21) Application number: **86308564.3**

(22) Date of filing: **03.11.86**

(51) Int. Cl.⁴: **C 08 K 5/09**
**C 08 L 33/06, C 08 L 33/20**

(30) Priority: **07.11.85 US 795799**

(43) Date of publication of application:
**20.05.87 Bulletin 87/21**

(84) Designated Contracting States:
**BE DE FR GB IT LU**

(71) Applicant: **CALGON CORPORATION**
**Route 60-Campbell's Run Road**
**Robinson Township Pennsylvania 15205** (US)

(72) Inventor: **Chen, Shih-Ruey T.**
**114 Firth Drive**
**Coraopolis Pennsylvania 15108** (US)

(74) Representative: **Crampton, Keith John Allen et al**
**D YOUNG & CO 10 Staple Inn**
**London WC1V 7RD** (GB)

(54) Cationic acrylate or methacrylate polymer admixtures.

(57) The stability of a cationic acrylate of methacrylate polymer is improved by adding to it 0.1 to 5.0% by weight, based on the weight of the polymer, of an acidic buffering compound. The resulting admixtures are novel.

EP 0 222 579 A2

**Description**

## CATIONIC ACRYLATE OR METHACRYLATE POLYMER ADMIXTURES

The storage life of cationic acrylate polymers, particularly emulsions, is short due to the lack of hydrolytic stability. These polymers are also found to be degraded during dilution, especially in a neutral or alkaline aqueous solution. A long storage life and good hydrolytic stability is desired to maintain the product quality, i.e. activity.

It has now been unexpectedly found that acidic buffering compounds improve the stability of these polymers.

The present invention provides an admixture comprising a cationic acrylate of methacrylate polymer and 0.1 to 5.0% by weight, based on the weight of the said polymer, of an acidic buffering compound.

Also in accordance with the present invention, the stability of a cationic acrylate or methacrylate polymer is improved by adding to it 0.1 to 5.0% by weight, based on the weight of the polymer, of an acidic buffering compound.

The stability of any cationic (meth)acrylate polymer is enhanced by the addition of an acidic buffering compound. Specific examples of such polymers include homopolymers of methacryloyloxyethyl trimethyl ammonium methosulfate (METAMS), methacryloyloxyethyl trimethyl ammonium chloride (METAC), acryloyloxyethyl trimethyl ammonium chloride (AETAC), and copolymers of the above monomers with acrylamide. The preferred polymers are copolymers of acrylamide and 2-methacryloyloxyethyl trimethyl ammonium chloride (AM/METAC) and copolymers of acrylamide and methacryloyloxyethyl trimethyl ammonium methosulfate (AM/METAMS).

Although the stability of any cationic (meth)acrylate polymer may be enhanced by the addition of the acid buffer, those having an intrinsic viscosity of at least 2.0 (MWT greater than 1,000,000) in 1.0 $\underline{M}$ sodium chloride are more prone to stability problems.

Any acidic buffering compound may be used. The preferred acidic buffering compounds are polycarboxylic acids with a $pK_1$ of 1.19 to 3.08 and a $pK_2$ of 4.72 to 13.0. Examples include citric acid, phthalic acid, succinic acid, adipic acid, tartaric acid and malic acid. The most preferred acidic buffering compound is citric acid.

The acidic buffering agent is used in a dosage range of 0.1 to 5.0%, by weight, based on the weight of the polymer.

The stability of the polymer is enhanced in all forms, e.g. emulsion, solution, and dry.

The admixtures of the present invention may be used as dewatering and paper retention aids.

EXAMPLES 1 through 8

A set of water-in-oil emulsion copolymers of acrylamide and 2-methacryloyloxyethyl trimethyl ammonium chloride (40/60 w/w, 37.5% active) was prepared. After polymerization, a citric acid solution was slowly added in before addition of the inverting surfactant. This set of emulsions, containing differing levels of citric acid, was stored at both 50°C and room temperature for four weeks. The polymer reduced viscosity (0.05% in IN NaCl at 30°C), the net cationic unit on the polymer, and the polymer performance as a sludge dewatering aid, were compared to a control. The results are shown in Table I below.

## TABLE I

| Example | Citric Acid/ Polymer (Wt.%) | Storage Temp. | n.05 in 1N NaCl (dl/g) | | | Weight % cationic charge | | | Sludge Dewatering Performance (mls $H_2O$ collected at 10 sec.) | | |
|---|---|---|---|---|---|---|---|---|---|---|---|
| | | | Init. | 4 Wks | Net Change | Init. | 4 Wks | Net Change | 3 lb/ton | 4 lb/ton | 5 lb/ton |
| 1 | 0 | 50°C | 16.7 | 13.8 | -2.9 | 60 | 51 | -9 | - | 213 | 244 |
| 2 | 1.33 | 50°C | 17.4 | 16.9 | -0.5 | 60 | 60 | 0 | 195 | 250 | 265 |
| 3 | 1.60 | 50°C | 15.9 | 15.0 | -0.9 | 59 | 59 | 0 | - | - | - |
| 4 | 2.13 | 50°C | 16.9 | 15.3 | -1.6 | 61 | 59 | -2 | 185 | 260 | 270 |
| 5 | 0 | Room | 16.7 | 14.8 | -1.9 | 60 | 60 | 0 | 155 | 250 | 260 |
| 6 | 1.33 | Room | 17.4 | 16.9 | -0.5 | 60 | 60 | 0 | - | - | - |
| 7 | 1.60 | Room | 15.9 | 15.8 | -0.1 | 59 | 59 | 0 | 170 | 253 | - |
| 8 | 2.13 | Room | 16.9 | 16.4 | -0.5 | 61 | 59 | -2 | - | - | - |

EXAMPLES 9 through 11

A commercial AM/METAMS dry polymer (Calgon K-400) was blended with both 2.5% and 4.0% citric acid (anhydrous). Next, these polymer blends, as well as the original polymer, were dissolved in tap water to make a 0.1% solution. The % net cationic unit (as METAMS) pm polymer was determined initially and after 24 hours. The polymers with citric acid were stable. The results are summarized in Table II.

**TABLE II**

| Example | Composition | Weight % cationic charge[2] | | |
|---|---|---|---|---|
| | | Initial | 24 Hours | Net Change |
| 9 | K-400[1] | 58 | 44 | -14 |
| 10 | K-400 + 2.5% Citric Acid | 61 | 58 | - 3 |
| 11 | K-400 + 4.0% Citric Acid | 61 | 61 | 0 |

[1] K-400 is a 40/60 w/w of a copolymer of acrylamide and methacryloyloxyethyl trimethyl ammonium methosulfate having an intrinsic viscosity between 5 and 10.

[2] The weight percent of cationic charge of polymer is determined by a colloid titration procedure. Polycationic (0.1% in concentration in water) is titrated by charge balance with a solution of polyvinyl sulfate, potassium salt, (PVSAK) using Toluidine Bluo-O as indicator. The PVSAK solution is standardized with poly(dimethyl diallyl ammonium chloride). The net cationic charge is expressed as a weight percent of cationic monomer unit of polymer.

EXAMPLE 12

The emulsion polymers of Example 1 through 8 were diluted down to 0.1% concentration in three different industrial waters. The polymers with citric acid were more stable than the one without citric acid as indicated in Table III.

## TABLE III

### Effect of Citric Acid on Polymer Stability

| Process Water | Weight % citric acid | Weight % Cationic Charge Initial | 24 hours | Net Change |
|---|---|---|---|---|
| Calgon Tap Water | 0 | 62 | 54 | -8 |
| (pH 7.2) | 0.53 | 59 | 58 | -1 |
| | 1.33 | 61 | 60 | -1 |
| | 1.60 | 60 | - | - |
| | 2.13 | 62 | - | - |
| Paper Process Water | 0 | 57 | 40 | -17 |
| (pH 6.8) | 1.33 | 60 | 59 | -1 |
| Sewage Treatment Water | 0 | 49 | - | - |
| (pH 7.3) | 1.33 | 54 | - | - |

## Claims

1. An admixture comprising a cationic acrylate of methacrylate polymer and 0.1 to 5.0%, by weight, based on the weight of the polymer, of an acidic buffering compound.

2. An admixture as claimed in claim 1, in which the acidic buffering compound is a polycarboxylic acid with a $pK_1$ of 1.9 to 3.08 and a $pK_2$ of 4.72 to 13.0.

3. An admixture as claimed in claim 2, in which the acid is citric acid, phthalic acid, succinic acid, adipic acid, tartaric acid or maleic acid.

4. An admixture as claimed in any preceding claim, in which the polymer is a homopolymer of methacryloyloxyethyl trimethyl ammonium methosulfate, methacryloyloxyethyl trimethyl ammonium chloride or acryloyloxyethyl trimethyl ammonium chloride, or a copolymer of one or more of the above monomers with acrylamide.

5. An admixture as claimed in claim 5, in which the polymer is a copolymer of acrylamide with 2-methacryloyloxyethyl trimethyl ammonium chloride or a copolymer of acrylamide with methacryloyloxyethyl trimethyl ammonium methosulfate.

6. A method for improving the stability of a cationic acrylate or methacrylate polymer, comprising adding to it 0.1 to 5.0% by weight, based on the weight of the polymer, of an acidic buffering compound.

7. A method as claimed in claim 6, in which the buffering compound is as defined in claim 2.

8. A method as claimed in claim 7, in which the acid is as defined in claim 3.

9. A method as claimed in claim 6, 7 or 8, in which the polymer is as defined in claim 4.

10. A method as claimed in claim 9, in which the polymer is as defined in claim 5.